# EUROPÄISCHE PATENTANMELDUNG

(11) **EP 0 548 656 A1**
(43) Veröffentlichungstag der Anmeldung: **30.06.1993**
(21) Anmeldenummer: 92120877.3
(22) Anmeldetag: 08.12.1992
(51) Int. Cl.: B60N 2/02

(54) **Konsole für elektrische Schaltgeräte**

(30) Priorität: 20.12.1991 DE 9115715 U; 04.02.1992 DE 9201312 U
(71) Anmelder: ABB PATENT GmbH, D-68309 Mannheim (DE)
(72) Erfinder: Stoffel, Andreas, W-5805 Breckerfeld (DE)
(74) Vertreter: Rupprecht, Klaus, Dipl.-Ing.

(57) **Zusammenfassung**

Die Erfindung betrifft eine Konsole (10) zur Aufnahme von elektrischen Schaltgeräten (14, 16, 18, 22, 24) zur Ferneinstellung von Fahrzeugsitzen mit einstellbaren Sitzflächen und Rückenlehnen sowie ausfahrbaren Nackenstützen, wobei die Schaltgeräte (14, 16, 18, 22, 24) in zwei Gruppen (12, 20) angeordnet sind, welche der Einstellung der Sitzfläche einerseits und der Einstellung der Neigung der Rückenlehnen und der Stellung der Nackenstützen andererseits zugeordnet sind.

## Beschreibung

Die Erfindung betrifft eine Konsole für elektrische Schaltgeräte zur fernbetätigten Einstellung von Kraftfahrzeugsitzen mit einstellbaren Sitzflächen und Rückenlehnen sowie ausfahrbaren Nackenstützen.

Kraftfahrzeuge sind in zunehmendem Maße mit verstellbaren Sitzeinrichtungen versehen, welche dazu dienen, den Fahrzeugbenutzern es zu ermöglichen, die Fahrzeugsitze an ihre Körperstatur so anzupassen, daß Fahrten mit dem Kraftfahrzeug weitgehend ermüdungsfrei bzw. ohne nachteilige physiologische Einwirkungen möglich sind.

Während ursprünglich hierbei nur die Sitzlängsverstellung mittels mechanischer Vorrichtung und später hinzukommend die Neigung der Rückenlehne, ebenfalls mit mechanischen Mitteln, einstellbar waren, ist bei neueren Kraftfahrzeugentwicklungen vorgesehen, neben der Sitzlängsverstellung und der Neigung der Rückenlehne auch die Neigung der Sitzflächen den Bedürfnissen des Fahrzeugbenutzers anzupassen. Hierzu dienen elektrische Stellmotoren, die mittels elektrischer Schaltgeräte ansteuerbar sind.

Hinzu kommt, daß auch die zwischenzeitlich durch Vorschriften geforderten Nackenstützen in die der Körpergröße des Fahrzeugbenutzers entsprechende Stellung verschiebbar sind, ebenfalls mittels elektrischer Stellmotoren.

Durch die große Zahl an Verstellmöglichkeiten der Sitzeinstellung der Kraftfahrzeugsitze, welche jede individuell gewünschte Sitzeinstellung erlaubt, ist eine den Einstellmöglichkeiten entsprechende Anzahl von elektrischen Schaltgeräten erforderlich, welche als Stellungsgeber dienen und üblicherweise als Tastschalter ausgebildet sind, welche nach zwei Seiten hin betätigbar sind und als Ruhestellung die Mittelstellung einnehmen. In dieser Stellung erfolgt keine Beaufschlagung der in die Fahrzeugsitze integrierten Stellmotoren.

Dabei erweist sich die vergleichsweise hohe Zahl an Stellgebern, nämlich im Regelfall 5 Stellgeber pro Fahrzeugsitz, insoweit als problematisch, als hierdurch die Aufmerksamkeit des Fahrzeugbenutzers bei der Einstellung seines Fahrzeugsitzes zu stark durch die Auswahl der entsprechenden Stellungsgeber beansprucht wird und er hierdurch vom Verkehrsgeschehen abgelenkt wird, um den für die gewünschte Sitzverstellung maßgeblichen Stellungsgeber zu betätigen.

Ausgehend vom vorstehend geschilderten Stand der Technik ist es daher Aufgabe der Erfindung eine Konsole für elektrische Schaltgeräte der eingangs genannten Art zu schaffen, welche es dem Fahrzeugbenutzer gestattet ohne besondere die Aufmerksamkeit beanspruchende Maßnahmen, zum Beispiel visuelle Inaugenscheinnahme, die für die gewünschte Sitzverstellung erforderliche Betätigung des jeweiligen Schaltgeräts sicher vorzunehmen, so daß er hierdurch nicht von der Beobachtung des Verkehrsgeschehens abgelenkt ist. Die Konsole soll einfach gestaltet, kostengünstig herstellbar und leicht bedienbar sein.

Die Lösung der Aufgabe besteht erfindungsgemäß in den kennzeichnenden Merkmalen des Patentanspruchs 1. Danach ist die Anordnung der Schaltgeräte auf der Konsole in zwei Gruppen vorgesehen, welche einerseits der Einstellung der Sitzfläche und andererseits der Einstellung der Neigung der Rückelehnen und der Stellung der Nackenstütze zugeordnet sind.

Dabei ist gemäß einer besonderen Ausgestaltung der Erfindung jede Gruppe der Schaltgeräte jeweils in einem Schaltfeld auf der Konsole angeordnet.

Unter Konsole wird hier im übrigen ein flaches quaderförmiges Gehäuse verstanden, das eine an der Bedienfläche am Rand angeformte Umrandung aufweist, die der Bedienfläche entgegengerichtet ist und einen Raum zur Aufnahme der Schaltgeräte umfaßt, deren Bedienelemente an der Bedienfläche angeordnet sind.

In vorteilhafter Weise ist jedes der beiden Schaltfelder mit einem erhaben aus der Konsoloberfläche hervortretenden Rand bzw. Kragen umgrenzt, wobei die Kontur jedes Feldes der des ihm zugeordneten Einstellbereich des Kraftfahrzeugsitzes entspricht. Demgemäß ist die Kontur des Feldes, in welchem die Schaltgeräte zur Einstellung der Sitzfläche, nämlich ihrer Längseinstellung sowie der Höheneinstellung der vorderen und hinteren Sitzfläche und somit deren Neigung, als horizontal verlaufender etwa rechteckiger Rahmen ausgebildet, während die Kontur des zweiten Einstellfeldes, welches die Schaltgeräte zur Einstellung der Neigung der Rückenlehne sowie der Stellung der Nackenstütze umfaßt, ebenfalls als etwa rechteckiger Rahmen ausgebildet ist, der vertikal bzw. leicht geneigt an das erste Feld anschließend ausgebildet ist. Aufgrund dieser Anordnung der beiden Einstellfelder wird letztlich der Umriß eines Fahrzeugsitzes symbolisiert, so daß der Benutzer anhand der Anordnung des jeweiligen Schaltgeräts in dem betreffenden Feld erkennt, für welche Schaltfunktion das betreffende Schaltgerät vorgesehen ist, ohne daß er dies visuell kontrollieren müßte.

Hierdurch ergibt sich ein großer Vorteil durch vereinfachte Bedienbarkeit der Sitzverstelleinrichtung bei gleichzeitig erhöhter Fahrsicherheit, da der Benutzer, beispielsweise der Fahrzeuglenker, nicht vom Verkehrsgeschehen abgelenkt wird, wenn er die Einstellung seines Sitzes vornimmt.

Entsprechend einer bevorzugten Ausgestaltung der Erfindung ist vorgesehen, daß in dem horizontalangeordneten Einstellfeld für die Verstellung der Sitzfläche beiderseits eines Schaltgeräts für die Längseinstellung des Fahrzeugsitzes je ein Schaltgerät zur Höheneinstellung der Sitzfläche angeordnet ist, und daß im zweiten Einstellfeld je ein Schaltgerät zur Einstellung der Neigung der Rückenlehne und zur Stellung der Nackenstütze vorgesehen ist.

In zweckmäßiger Weiterbildung der Erfindung ist dabei vorgesehen, die Schaltgeräte als Zweiwege-Schiebetaster auszubilden mit neutraler Mittelstellung, wobei die Bedienfläche jedes Schaltgeräts mit einem quer zum Verschiebungsweg verlaufenden Griffstück ausgestattet ist. Durch Verschieben des Griffstücks in die eine oder andere Richtung erfolgt die Betätigung des dem jeweiligen Einstellbereich zugeordneten Stellmotors. Dabei entspricht die Haltedauer in der von der Nullstellung abweichenden Stellung des Griffstücks der Betätigungsdauer des Stellmotors.

An Stelle der vorerwähnten Zweiwege-Schiebetaster kann es auch vorteilhaft sein, Wipp- oder Drucktaster vorzusehen, welche hinsichtlich ihrer Schaltfunktion ebenfalls so angeordnet sind, daß eine einfachere und gleichzeitig sichere Handhabung gewährleistet ist.

Eine weitere vorteilhafte Ausgestaltung sieht vor, daß bestimmte Sitz-Einstellungen, z. B. für verschiedene Personen erfaßt und gespeichert werden. Hierzu sind weitere als Memory-Schalter bezeichnete Schalter vorgesehen.

Zur Vermeidung von Störungen, insbesondere von Löschungen der gespeicherten Einstellwerte sind diese Memory-Schalter geschützt angeordnet, z. B. an der seitlichen Begrenzungswand der Konsole oder ggf. auch versenkt.

Zur Verbesserung der Handhabung der Erfindung kann ferner vorgesehen sein, daß die Konsole in der Sitzseitenfläche angeordnet ist, so daß der jeweilige Benutzer leicht ohne besondere Anstrengung infolge Strecken die Bedienfläche erreicht.

Diese und weitere vorteilhafte Ausgestaltungen der Erfindung sind in den Unteransprüchen gekennzeichnet.

Anhand eines in der Zeichnung dargestellten Ausführungsbeispiels sollen die Erfindung, vorteilhafte Ausgestaltungen und Verbesserungen der Erfindung näher erläutert und beschrieben werden.

Es zeigen:
- Fig. 1: die Draufsicht auf eine erfindungsgemäße Konsole,
- Fig. 2: die Innenansicht einer Fahrzeugtür mit integrierter Konsole gemäß Fig. 1.

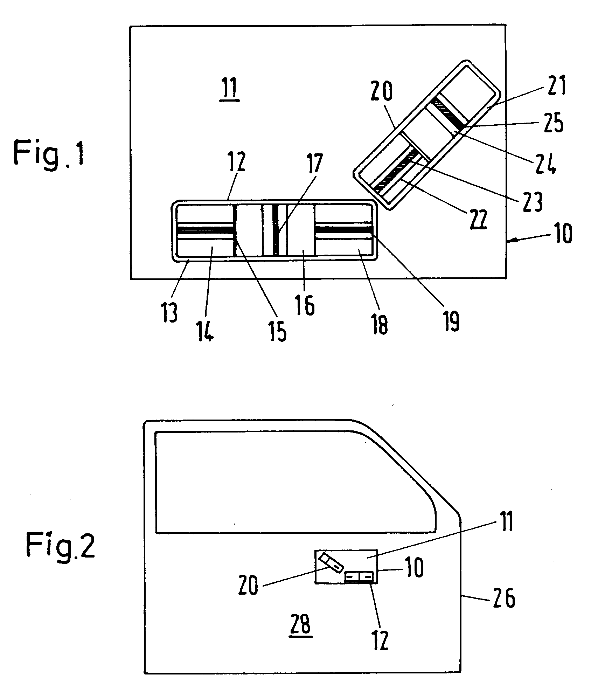

In Fig. 1 ist eine Konsole 10 dargestellt, die als Sitzverstelltableau zur Aufnahme von zwei Schaltfeldern 12 und 20 dient. Die Konsole 10 besteht im wesentlichen aus einer etwa rechteckförmigen Aufnahmefläche 11, auf welcher die Schaltfelder 12 und 20 angeordnet sind.

Die Konsole 10 ist mit einer hier nicht näher gezeigten umlaufenden Umrandung versehen, die in Richtung der Zeichenebene an die Aufnahmefläche anschließt und so einen Schaltraum umgrenzt. Die derart kastenförmig ausgebildete Konsole 10 wird abhängig vom vorgesehenen Motnageort auf die jeweilige Montagefläche aufgesetzt oder in diese integriert. In letzterem Fall schließt die Aufnahmefläche 11 quasi bündig mit der Montagefläche 11 für die Konsole 10 ab, so daß die Umrandung in den Montageort versenkt angeordnet ist. Hierbei kann die Umrandung mit einem Bund als Anschlagsfläche versehen sein.

In den Schaltfeldern 12 und 20 sind als Zweiwege-Schiebetaster ausgebildete Schaltgeräte 14, 16, 18, 22, 24 angeordnet. Das erste Schaltfeld 12 ist dabei vorgesehen zur Aufnahme der zur Ferneinstellung der Sitzfläche eines hier nicht näher gezeigten Fahrzeugsitzes erforderlichen Schaltgeräte 14, 16, 18. Entsprechend der Lageanordnung der den Schaltgeräten 14, 16, 18 zugeordneten hier ebenfalls nicht näher gezeigten Stellmotoren in den Fahrzeugsitz bzw. hier dessen Sitzfläche dient das Schaltgerät 14 zur Einstellung der vorderen Sitzhöhe, das Schaltgerät 16 zur Längseinstellung des Fahrzeugsitzes und das Schaltgerät 18 zur Einstellung der hinteren Sitzhöhe.

Das zweite Schaltfeld 20 ist zur Einstellung der Neigung der Rückenlehne des Fahrzeugsitzes sowie der Stellung der hierin integrierten Nackenstütze vorgesehen. Dabei dient das Schaltgerät 22 zur Einstellung der Neigung der Rückenlehne, während durch Betätigung des Schaltgeräts 24 die Nackenstütze ein- oder ausgefahren werden kann, abhängig von der Betätigungsrichtung und -dauer.

Das erste Schaltfeld 12 ist parallel zur Längsseite der Konsole 10 auf der Aufnahmefläche 11 angeordnet. Dagegen ist das zweite Schaltfeld 20 hierzu geneigt auf der Aufnahmefläche 11 der Konsole 10 angeordnet entsprechend der üblichen Neigung von Rückenlehnen von Fahrzeugsitzen.

Zur eindeutigen Abgrenzung gegeneinander ist jedes der beiden Schaltfelder 12, 20 mit einem aus der Aufnahmefläche 11 erhaben hervortretenden Kragen bzw. Rand 13, 21 umfaßt, der es gestattet, nur durch Fühlen die Schaltgeräte 14, 15, 18, 22, 24 den zugehörigen Schaltfeldern 12, 20 zuzuordnenden zu identifizieren und planmäßig zu betätigen.. Hierdurch wird erreicht, daß ohne visuelle Einsichtnahme die Betätigung des zur Einstellung der gewünschten Sitzposition erforderlichen Stellmotors bzw. des diesem zugeordneten Schaltgeräts 14, 16, 18, 22, 24 eindeutig erfolgen kann. Fehlhandlungen sind aufgrund des jedes Schaltfeld 12, 20 umfassenden Randes 13, 21 praktisch ausgeschlossen.

Die einzelnen Schaltgeräte 14, 16, 18, 22, 24, die als Zweiwege-Schiebetaster ausgebildet sind, besitzen jeweils ein Griffstück 15, 17, 19, 23, 25, welches die sichere Betätigung des jeweiligen Schaltgeräts 14, 16, 18, 22, 24 ermöglicht. Die Höhe des aus der Ebene der Aufnahmefläche 11 der Konsole 10 herausragenden Griffstücke 15, 17, 19, 23, 25 ist dabei vorteilhafterweise so gewählt, daß sie den die Schaltfeldern 12, 20 umfassenden Rand 13, 21 nicht überragt. Hierdurch ist ferner sichergestellt, daß ungewünschte Fehlbetätigungen durch unbeabsichtigtes Berühren eines Schaltgeräts 14, 16, 18, 22, 24 ausgeschlossen sind.

In Fig. 2 ist die Innenansicht einer Fahrzeugtür 26 dargestellt, deren Seitenverkleidung 28 mit einer Konsole 10 gemäß Fig. 1 versehen ist.

Wie aus Fig. 2 ersichtlich, ist die Anordnung der Schaltfelder 12, 20 auf der Aufnahmefläche 11 der Konsole 10 entsprechend der Lagezuordnung von Rückenlehne zur Sitzfläche des betreffenden Fahrzeugsitzes vorgesehen. Im gezeigten Beispiel handelt es sich um die linke Vordertür eines Fahrzeuges, so daß auch das Schaltfeld 20 zur Einstellung der Rückenlehne links vom Schaltfeld 12 zur Einstellung der Sitzfläche des Fahrzeugsitzes angeordnet ist.

Die Integration der Konsole 10 in die Seitenverkleidung 28 einer Fahrzeugtür 26 ist besonders vorteilhaft, da der jeweilige Benutzer so die Möglichkeit vorfindet, die ihm genehme Sitzposition exakt einzustellen, da er die Konsole 10 bequem erreichen kann und nicht hierzu die gewünschte Sitzposition verlassen muß.

## Patentansprüche

1. Konsole für elektrische Schaltgeräte zur fernbetätigten Einstellung von Kraftfahrzeugsitzen mit einstellbaren Sitzflächen und Rückenlehnen sowie ausfahrbaren Nackenstützen, dadurch gekennzeichnet, daß die Schaltgeräte (14, 16, 18, 22, 24) in zwei Gruppen (12, 20) angeordnet sind, welche der Einstellung der Sitzfläche einerseits und der Einstellung der Neigung der Rückenlehnen und der Stellung der Nackenstütze andererseits zugeordnet sind.

2. Konsole nach Anspruch 1, dadurch gekennzeichnet, daß eine erste Gruppe die Schaltgeräte (14, 16, 18) umfaßt und in einem ersten Schaltfeld (12) angeordnet ist und daß die zweite Gruppe die Schaltgeräte (22, 24) umfaßt und in einem zweiten Schaltfeld (20) angeordnet ist.

3. Konsole nach Anspruch 2, dadurch gekennzeichnet, daß jedes Schaltfeld (12, 20) mit einem erhaben aus der Aufnahmefläche (11) der Konsole (10) hervortretenden Rand (13, 21) umfaßt ist.

4. Konsole nach einem der vorherigen Ansprüche, dadurch gekennzeichnet, daß die Lagezuordnung der Schaltfelder (12, 20) auf der Aufnahmefläche (11) der Konsole (10) der Lage und der Kontur des ihm zugeordneten Einstellbereichs des Kraftfahrzeugsitzes entspricht, wobei das erste Schaltfeld horizontal angeordnet ist entsprechend der horizontalen Sitzfläche eines Fahrzeugsitzes, und das zweite Schaltfeld (20) hierzu geneigt entsprechend der Neigung der Rückenlehne eines Fahrzeugsitzes.

5. Konsole nach einem der vorherigen Ansprüche, dadurch gekennzeichnet, daß die Schaltgeräte (14, 16, 18, 22, 24) als Zweiwege-Schiebetaster mit mittlerer Ruhestellung ausgebildet sind.

6. Konsole nach einem der Ansprüche 1 bis 4, dadurch gekennzeichnet, daß die Schaltgeräte als Wipp-Taster ausgebildet sind.

7. Konsole nach einem der Ansprüche 1 bis 4, dadurch gekennzeichnet, daß die Schalter als Druck-Taster ausgebildet sind.

8. Konsole nach einem der vorherigen Ansprüche, dadurch gekennzeichnet, daß wenigstens ein Memory-Schalter vorgesehen ist, welcher zur Erfassung und Abspeicherung einer bestimmten Sitzeinstellung dient und bei Betätigung die gespeicherte Sitzeinstellung veranlaßt.

9. Konsole nach einem der vorherigen Ansprüche, dadurch gekennzeichnet, daß die Einstellung eines Fahrzeugsitzes durch voneinander unabhängige Betätigung der Schaltgeräte (14, 16, 18, 22, 24) vorgesehen ist.

10. Konsole nach einem der vorherigen Ansprüche, dadurch gekennzeichnet, daß die Konsole (10) an der Seitenverkleidung (28), zum Beispiel einer Fahrzeugtür (26) angeordnet ist.

11. Konsole nach einem der Ansprüche 1 bis 9, dadurch gekennzeichnet, daß die Konsole an der Seitenfläche des zugeordneten Sitzes angeordnet ist.
